# EUROPEAN PATENT APPLICATION

(11) **EP 2 436 592 A1**
(43) Date of publication of application: **04.04.2012**
(21) Application number: 11173511.4
(22) Date of filing: 12.07.2011
(51) Int. Cl.: B62M 6/65, B62M 11/16, B62M 23/02

(54) **Electric bicycle hub unit, and electric bicycle including the hub**

(30) Priority: 30.09.2010 JP 2010220537
(71) Applicant: SANYO ELECTRIC CO., LTD., Moriguchi-shi, Osaka 570 (JP); Sanyo Consumer Electronics Co., Ltd., Tottori-shi Tottori 680-8634 (JP)
(72) Inventor: Nishimori, Masato, Tottori, 680-8634 (JP)
(74) Representative: Witte, Weller & Partner

(57) **Abstract**

In an electric bicycle (1), an assist driving force is generated by a hub unit (30) mounted in a front wheel (18). The hub unit (30) includes a hub (31) including a hub casing (35) and a lid (36) closing an open end (34) of the hub casing (35), a motor (32), and a planetary gear deceleration mechanism (33) which decelerates rotation of the motor (32) and transmits the decelerated rotation to the hub (31). The motor (32) is located adjacent the hub casing (35), and the planetary gear deceleration mechanism (33) is located adjacent the lid (36). A roller braking device (60) is attached to the lid (36).

## Description

### Technical Field

The present invention relates to an electric bicycle hub unit, and to an electric bicycle including the hub unit.

### Background Art

Electric bicycles which are driven by a motor employing a battery as a power source (including electrically assisted bicycles adapted to assist a pedaling force by a motor) ensure easy driving when carrying a heavy load or traveling uphill. Therefore, more and more consumers selectively buy such electric bicycles. An exemplary electric bicycle is disclosed in JP-A-HEI6(1994)-107266.

In designing a power transmission system for the electric bicycle, the position of the motor is always a major issue. JP-A-2005-335535 and JP-A-2009-12627 propose to incorporate the motor together with a deceleration mechanism in a front wheel hub or a rear wheel hub.

The electric bicycle generally has an increased mass with the battery mounted therein, thereby requiring a greater braking force. JP-C-4073929 and JP-A-2006-347412 disclose roller braking devices which generate a greater braking force.

Such a roller braking device is generally produced by combining precisely machined components together. In order to ensure intended braking performance, it is necessary to prevent the roller braking device from being subjected to temperature rise.

### Summary of Invention

In view of the foregoing, it is an object of the present invention to provide an electric bicycle hub unit incorporating a motor and a deceleration mechanism and configured to be mounted with a roller braking device so as not to be adversely affected by heat.

According to one aspect of the present invention, there is provided an electric bicycle hub unit, which includes: a hub; a motor incorporated in the hub; and a deceleration mechanism incorporated in the hub for decelerating rotation of the motor and transmitting the decelerated rotation to the hub; wherein a roller braking device is mounted on a side surface of the hub located adjacent the deceleration mechanism.

In the inventive electric bicycle hub unit, the hub includes a hub casing having an open end, and a lid closing the open end. In the hub, the motor is located adjacent the hub casing, and the deceleration mechanism is located adjacent the lid. Further, the roller braking device is attached to the lid.

In the present invention, the roller braking device includes a brake drum. The electric bicycle hub unit further includes a hub shaft projecting from a center of the lid, and an intermediate ring surrounding the hub shaft. The brake drum is fixed to the lid via the intermediate ring.

In the inventive electric bicycle hub unit, a labyrinth engagement portion is defined between the intermediate ring and the lid.

In the inventive electric bicycle hub unit, the intermediate ring has a male thread portion provided on an outer periphery thereof, and the lid has a female thread portion in which the male thread portion is threadingly engaged. Further, a force acts on the intermediate ring in a thread tightening direction when the roller braking device is actuated.

According to another aspect of the present invention, there is provided an electric bicycle which includes the hub unit described above.

In the inventive electric bicycle, the hub unit is mounted in a front wheel.

According to the present invention, the roller braking device is attached to the hub incorporating the motor and the deceleration mechanism which decelerates the rotation of the motor and transmits the decelerated rotation to the hub. In this case, the roller braking device is not attached to a portion of the hub located adjacent the motor which generates a greater amount of heat, but attached to the side surface of the hub located adjacent the deceleration mechanism which generates a smaller amount of heat. Thus, the roller braking device is located away from the heat generating component, so that the temperature rise of the roller braking device can be suppressed to ensure intended braking performance.

### Brief Description of Drawings

Fig. 1 is a side view of an electric bicycle.

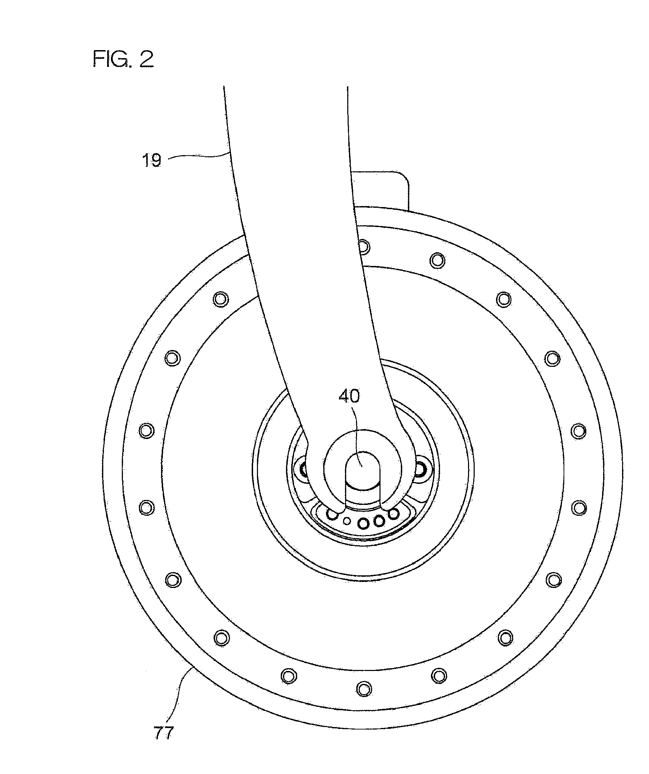

Fig. 2 is a partly enlarged view of the electric bicycle.
Fig. 3 is a sectional view of a hub unit according to an embodiment of the present invention.
Fig. 4 is a partly enlarged view of the hub unit shown in Fig. 3.
Fig. 5 is a partly enlarged view of a roller braking device.
Fig. 6 is a side view of a cooling disk of the roller braking device.
Fig. 7 is a front view of the cooling disk of the roller braking device.

### Description of Embodiments

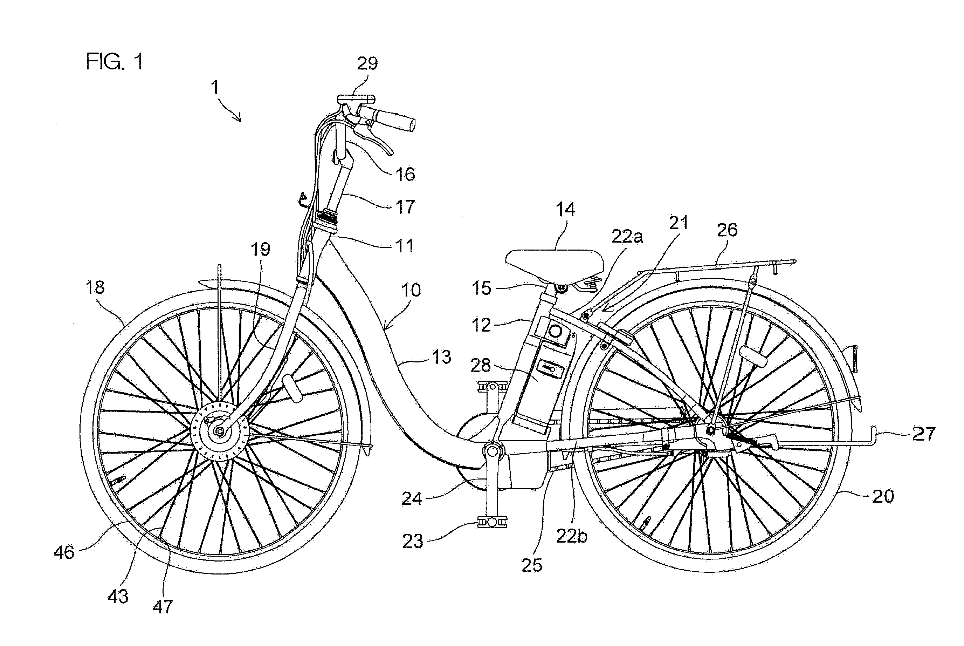

The overall construction of an electric bicycle will first be described with reference to Fig. 1.

The electric bicycle 1 is an electrically assisted bicycle adapted to assist a pedaling force by a motor. The electric bicycle 1 includes a frame 10, which includes a head tube 11 provided at a front end thereof, a seat tube 12 disposed at a rider riding position, and a down tube 13 connecting the head tube 11 to the seat tube 12. A seat post 15 having a saddle 14 provided at an upper end thereof is inserted in the seat tube 12 in a vertically adjustable manner. The head tube 11 rotatably retains a handle system 17 of a handle 16.

A front wheel 18 is supported by a front fork 19 connected to the handle system 17 in a nonrotatable manner. A rear wheel 20 is supported by a rear fork 21, which includes a seat stay 22a extending rearward from the upper end of the seat tube 12, and a chain stay 22b extending rearward from a lower end of the seat tube 12.

A crank 24 including pedals 23 is disposed at a position at which the seat tube 12, the down tube 13 and the chain stay 22b join together. A rotational force of the crank 24 is transmitted to the rear wheel 20 via a chain 25.

A roller braking device, which will be described later in detail, is provided in the front wheel 18. A rear brake (not shown) for braking a hub of the rear wheel 20 is provided in the rear wheel 20.

A rack 26 is attached to the rear fork 21. A stand 27 is also attached to the rear fork 21.

A battery case 28 serving as a power source for the electric bicycle 1 is removably attached to a rear face of the seat tube 12. A manual controller 29 to be operated to input a control command for an electric assist operation is attached to the handle 16.

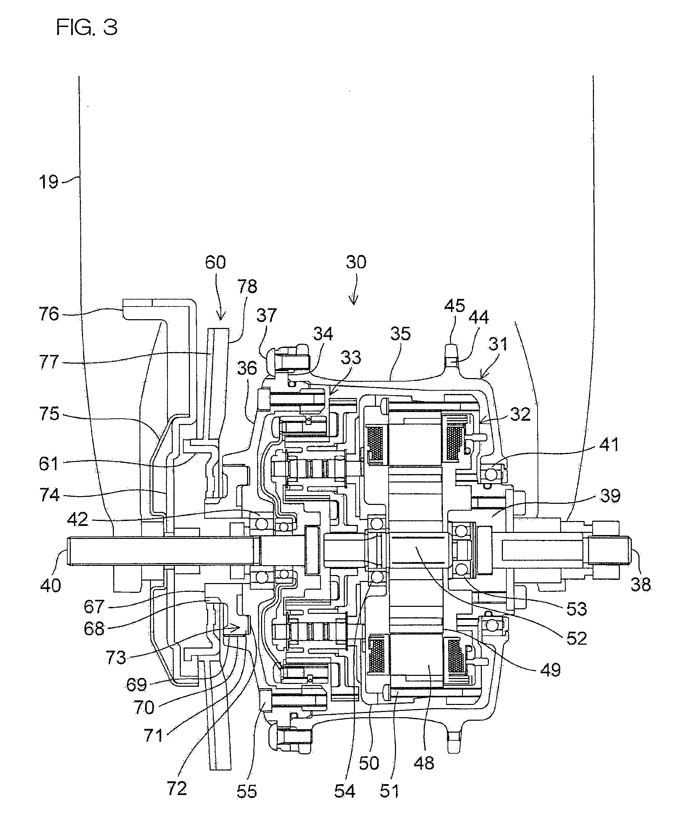

A hub unit 30 adapted to apply an assist propulsive force to the electric bicycle 1 is combined with the front wheel 18. Referring mainly to Fig. 3, the construction of the hub unit 30 will be described.

The hub unit 30 includes a hub 31, and a motor 32 and a planetary gear deceleration mechanism 33 incorporated in the hub 31. Since the planetary gear deceleration mechanism 33 is well known, detailed description will not be given to the planetary gear deceleration mechanism 33.

The hub 31 has an outer shell, which includes a hub casing 35 having an open end 34, and a lid 36 closing the open end 34. The lid 36 is fixed to the hub casing 35 by a plurality of screws 37 provided at predetermined angular intervals. A center piece 39 having a hub shaft 38 projecting outward is disposed at a center of the hub casing 35, and a hub shaft 40 projecting outward is disposed at a center of the lid 36. A ball bearing 41 is provided between the center piece 39 and the hub casing 35, and a ball bearing 42 is provided between the hub shaft 40 and the lid 36. The hub 31 is rotatably supported about the hub shafts 38, 40 via the ball bearings 41, 42.

The hub casing 35 has a flange 45 having holes 44 provided at predetermined angular intervals for receiving spokes 43 (see Fig. 1) of the front wheel 18. The lid 36 also has a similar flange. The spokes 43 are inserted through the holes of the flange of the hub casing 35 and the holes of the flange of the lid 36, and stretched by threadingly engaging distal ends of the spokes 43 with nipples 47 of a rim 46 (see Fig. 1) of the front wheel 18 and then tightening the nipples 47. By performing this operation for each of the spokes 43, the hub 31 and the rim 46 are firmly fixed with respect to each other via the spokes 43. Thereafter, the front wheel 18 is completed with a tube and a tire attached to the rim 46. The hub shafts 38, 40 are fixed to the front fork 19 by a well known method, whereby the front wheel 18 is rotatable about the hub shafts 38, 40. The hub shafts 38, 40 per se are nonrotatable with respect to the front fork 19.

The motor 32 includes a stator 48 including a clad iron core and coils, a pair of end brackets holding the stator 48 therebetween, and a rotor 49 disposed at a center of the stator 48. Here, the center piece 39 serves as one of the end brackets, and is combined with the other end bracket 50 located on an opposite side of the stator 48. The stator 48 is combined with the center piece 39 by fitting the stator 48 on the center piece 39, fitting the end bracket 50 on the stator 48, and threadingly engaging a plurality of screws 51 with the center piece 39 from the side of the end bracket 50. Since the center piece 39 is nonrotatable with respect to the hub shaft 38, the stator 48 is also nonrotatable with respect to the hub shaft 38, i.e., nonrotatable with respect to the front fork 19.

The rotor 49 has a rotor shaft 52 provided at a center thereof, and the rotor shaft 52 is rotatably supported by the center piece 39 and the end bracket 50 via ball bearings 53, 54. One end portion of the rotor shaft 52 projects outward of the end bracket 50, and is connected to an input portion of the planetary gear deceleration mechanism 33. An output portion of the planetary gear deceleration mechanism 33 is connected to the lid 36 by a plurality of bolts 55. With this arrangement, the rotation of the motor 32 is decelerated and transmitted to the hub 31 by the planetary gear deceleration mechanism 33.

The planetary gear deceleration mechanism 33 includes a one-way clutch, which transmits the rotation of the motor 32 to the hub 31 but does not transmit the rotation of the front wheel 18 to the motor 32. This eliminates the possibility that a greater pedaling force is required for stepping down the pedals 23 when an assist traveling operation is not performed.

The roller braking device 60 is attached to the hub unit 30. More specifically, the roller braking device 60 is attached to the lid 36 which defines a side surface of the hub 31 located adjacent the deceleration mechanism 33. The construction of the roller braking device 60 will be described.

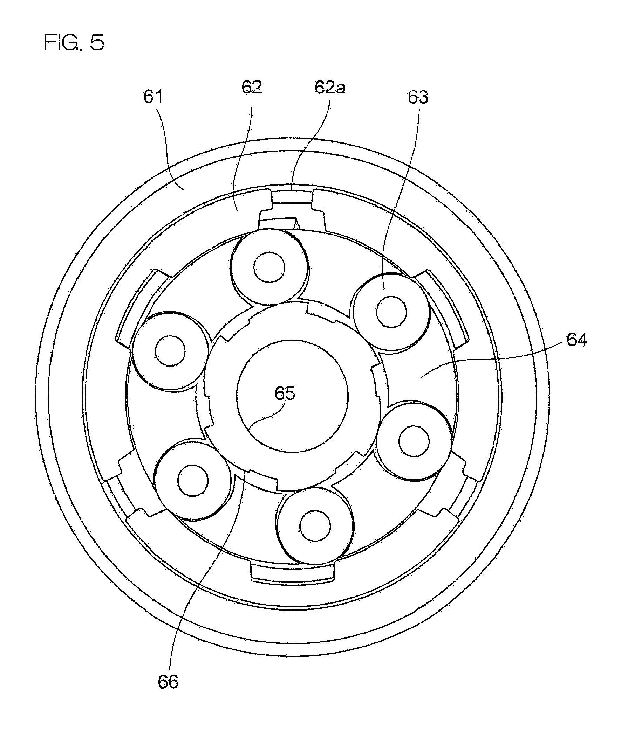

The roller braking device 60 has the same basic construction as those disclosed in JP-C-4073929 and JP-A-2006-347412. As shown in Fig. 5, a plurality of brake shoes 62 (three brake shoes 62 in this embodiment) are provided inside a brake drum 61. The brake drum 61 is nonrotatable with respect to the lid 36, and the brake shoes 62 are nonrotatable with respect to the front fork 19. Thus, the brake shoes 62 can brake the brake drum 61.

The brake shoes 62 each extend along a one-third arc of the brake drum 61, and are biased toward a center of the brake drum 61 by springs 62a. The brake shoes 62 are each supported radially outward of the brake drum 61 by two rollers 63. A total of six rollers 63 are retained at an angular interval of 60 degrees by a ring-shaped retainer 64 so as not to contact each other. A rotary cam 65 is disposed at a center of the retainer 64. The rotary cam 65 has six outer peripheral cam surfaces 66 in association with the six rollers 63, and a distance between each of the cam surfaces 66 and the center of the rotary cam 65 is progressively increased.

In Fig. 5, the cam surfaces 66 push the corresponding rollers 63 outward when the rotary cam 65 is rotated counterclockwise. The rollers 63 push the corresponding brake shoes 62 against biasing forces of the springs 62a, whereby the brake shoes 62 are brought into contact with an inner peripheral surface of the brake drum 61. Thus, the brake drum 61 is braked and, hence, the hub 31 is braked. When a rider grips a right-hand brake lever (not shown) of the handle 16, a gripping force is transmitted to the rotary cam 65 via a cable, whereby the rotary cam 65 is rotated counterclockwise in Fig. 5.

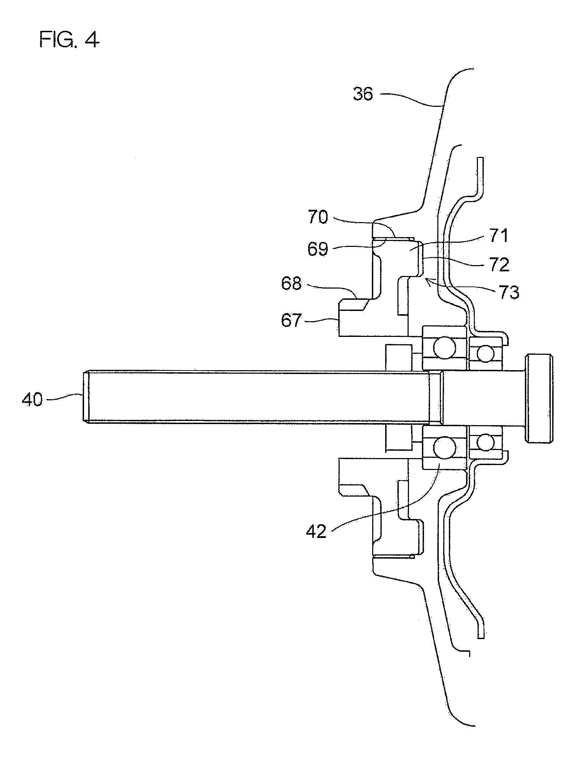

The brake drum 61 is fixed to the lid 36 via an intermediate ring 67 (see Figs. 3 and 4). The intermediate ring 67 surrounds the hub shaft 40. The intermediate ring 67 has a serration 68 provided on one end face thereof to be thereby nonrotatably connected to the brake drum 61. The intermediate ring 67 further has a male thread portion 69 provided on an outer periphery thereof. The lid 36 has a female thread portion 70 in which the male thread portion 69 is threadingly engaged. A threading direction in which the male thread portion 69 and the female thread portion 70 are threadingly engaged with each other is such that a force acts on the intermediate ring 67 in a thread tightening direction when the roller braking device 60 is actuated. When the front wheel 18 is braked by the roller braking device 60, therefore, the connection between the intermediate ring 67 and the lid 36 is increasingly enhanced, eliminating the possibility that the intermediate ring 67 is disengaged from the lid 36.

The intermediate ring 67 has an annular projection 71 provided on an end face thereof facing toward the lid 36. The lid 36 has an annular groove 72 which receives the projection 71. With the intermediate ring 67 fixed to the lid 36, the projection 71 is fitted in the groove 72 to define a labyrinth engagement portion 73 between the intermediate ring 67 and the lid 36. The labyrinth engagement portion 73 prevents water from intruding into the hub 31 toward the center of the hub 31 from the outside, thereby protecting the ball bearing 42 and the like from the intruding water.

As shown in Fig. 3, a brake housing 74 is opposed to an opening of the brake drum 61, and the brake shoes 62, the rollers 63, the retainer 64 and the rotary cam 65 are supported by the brake housing 74. The brake housing 74 is nonrotatable with respect to the front fork 19. An ornament disk 75 is attached to an outer surface of the brake housing 74 (facing away from the brake drum 61). Further, the brake housing 74 includes a stay 76 which supports a tubular sheath of the cable (not shown) adapted to move the rotary cam 65.

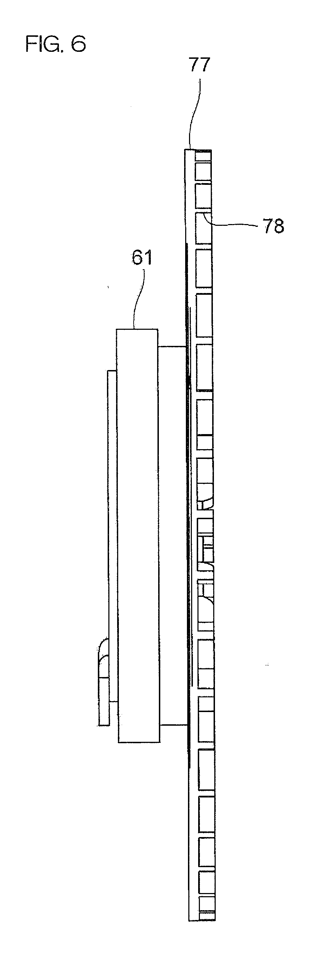

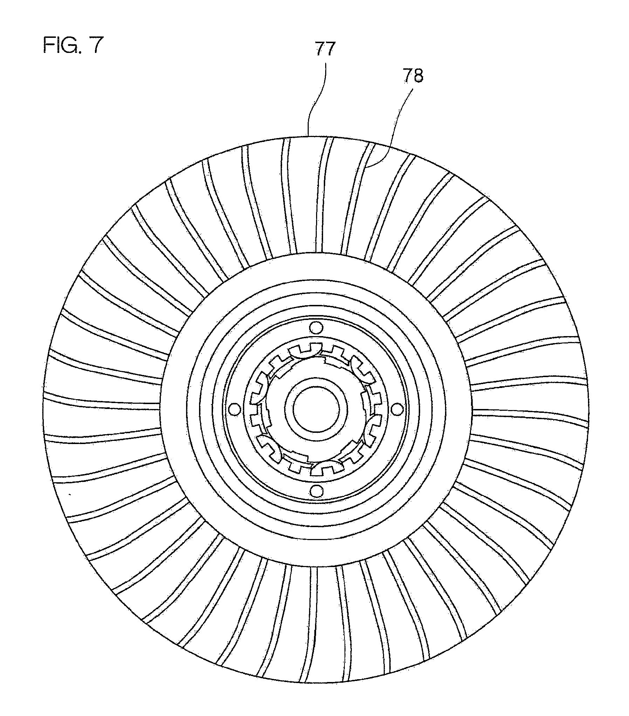

A cooling disk 77 is fixed to the brake drum 61. The cooling disk 77 is die-cast from an aluminum alloy, and includes a multiplicity of fins 78 provided radially on an inner surface thereof (facing toward the lid 36), shown in Fig. 6 and Fig. 7.

In the hub 31 including the hub casing 35 and the lid 36, as described above, the motor 32 which generates a greater amount of heat is disposed adjacent the hub casing 35, and the planetary gear deceleration mechanism 33 which generates a smaller amount of heat is disposed adjacent the lid 36. Further, the roller braking device 60 is attached to the lid 36. That is, the roller braking device 60 is located away from the heat-generating motor 32. This suppresses the temperature rise of the roller braking device 60 to ensure the intended braking performance. In addition, when the hub 31 is rotated, the fins 78 blow air toward the outer periphery from the center of the hub 31, whereby the cooling disk 77 is air-cooled. This more reliably suppresses the temperature rise of the roller braking device 60.

In the electric bicycle 1, the hub unit 30 incorporating the motor 32 and the planetary gear deceleration mechanism 33 is mounted in the front wheel 18. The front wheel 18 is driven by the motor 32, and the rear wheel 20 is humanly driven by pedaling the pedals 23. Thus, both the front wheel and the rear wheel are driven to improve the traveling stability. Since the hub unit 30 incorporating the motor 32 and the planetary gear deceleration mechanism 33 is mounted in the front wheel 18, the front wheel 18 has greater inertia. However, a sufficient braking force can be applied to the front wheel 18, because the roller braking device 60 capable of applying a greater braking force is attached to the hub unit 30.

While the embodiment of the present invention has thus been described, it should be understood that the present invention be not limited to the embodiment but various modifications may be made without departing from the spirit and scope of the present invention.

### Industrial Applicability

The present invention is widely applicable to hub units of electric bicycles.

This application corresponds to Japanese Patent Application No. 2010-220537 filed with the Japan Patent Office on September 30, 2010, the disclosure of which is incorporated herein by reference.

## Claims

1. A hub unit (30) for an electric bicycle (1), the hub unit comprising:
a hub (31);
a motor (32) incorporated in the hub; and
a deceleration mechanism (33) incorporated in the hub for decelerating rotation of the motor and transmitting the decelerated rotation to the hub;
wherein a roller braking device (60) is mounted on a side surface of the hub located adjacent the deceleration mechanism.

2. The electric bicycle hub unit according to claim 1,
wherein the hub includes a hub casing (35) having an open end (34) and a lid (36) closing the open end,
wherein the motor is located adjacent the hub casing and the deceleration mechanism is located adjacent the lid in the hub,
wherein the roller braking device is attached to the lid.

3. The electric bicycle hub unit according to claim 2,
wherein the roller braking device comprises a brake drum (61),
the hub unit further comprising:
a hub shaft (40) projecting from a center of the lid; and
an intermediate ring (67) surrounding the hub shaft,
wherein the brake drum is fixed to the lid via the intermediate ring.

4. The electric bicycle hub unit according to claim 3, wherein a labyrinth engagement portion (73) is defined between the intermediate ring and the lid.

5. The electric bicycle hub unit according to claim 3 or 4,
wherein the intermediate ring has a male thread portion (69) provided on an outer periphery thereof,
wherein the lid has a female thread portion (70) in which the male thread portion is threadingly engaged,
wherein a force acts on the intermediate ring in a thread tightening direction when the roller braking device is actuated.

6. An electric bicycle comprising a hub unit as recited in any of claims 1 to 5.

7. The electric bicycle according to claim 6, wherein the hub unit is mounted in a front wheel (18).
